Europäisches Patentamt

European Patent Office

Office européen des brevets

(11) Veröffentlichungsnummer: **0 247 519 B1**

## (12) EUROPÄISCHE PATENTSCHRIFT

(45) Veröffentlichungstag der Patentschrift: 04.09.91

(51) Int. Cl.⁵: **C02F 3/30**, C02F 3/32

(21) Anmeldenummer: 87107394.6

(22) Anmeldetag: 21.05.87

(54) **Verfahren zur Abwasserreinigung.**

(30) Priorität: 28.05.86 DE 3618029

(43) Veröffentlichungstag der Anmeldung:
02.12.87 Patentblatt 87/49

(45) Bekanntmachung des Hinweises auf die
Patenterteilung:
04.09.91 Patentblatt 91/36

(84) Benannte Vertragsstaaten:
AT DE ES FR GB IT

(56) Entgegenhaltungen:
EP-A- 0 170 991          AT-B- 347 877
DE-A- 2 910 015          DE-A- 3 011 276
DE-A- 3 508 916          US-A- 4 548 712

(73) Patentinhaber: Kickuth, Reinhold, Prof.Dr.
Gilsbergstrasse 9
W-3436 Hess.-Lichtenau(DE)

Patentinhaber: Könemann, Norbert, Dr.-Ing.
Mühlenstrasse 4
W-3527 Calden-Obermeiser(DE)

(72) Erfinder: Kickuth, Reinhold, Prof.Dr.
Gilsbergstrasse 9
W-3436 Hess.-Lichtenau(DE)
Erfinder: Könemann, Norbert, Dr.-Ing.
Mühlenstrasse 4
W-3527 Calden-Obermeiser(DE)

(74) Vertreter: Weisse, Jürgen, Dipl.-Phys. et al
Patentanwälte Dipl.-Phys. Jürgen Weisse
Dipl.-Chem. Dr. Rudolf Wolgast Bökenbusch
41 Postfach 11 03 86
W-5620 Velbert 11 Langenberg(DE)

## Beschreibung

Die Erfindung bezieht sich auf ein Verfahren zur Reinigung von Abwässern, die Ammoniak bzw. Ammoniumverbindungen enthalten, wobei in einer ersten Reinigungsstufe die überwiegende Menge des Ammoniaks bzw. der Ammoniumverbindungen unter aeroben Bedingungen in Gegenwart von Nitrifikanten zu Nitrat oxidiert und in einer nachfolgenden zweiten Reinigungsstufe das in der ersten Reinigungsstufe gebildete Nitrat unter anaeroben Bedingungen zu Stickstoff umgesetzt wird.

Im Hinblick auf DE-A-3 508 916 werden zwei gesonderte Sätze von Patentansprüchen angegeben.

Die klassischen Verfahren der Abwasserbehandlung zielen auf die oxidative Entfernung der Abwasserinhaltsstoffe ab. Das bedeutet zum Beispiel für die stickstoffhaltigen Laststoffe eine Umwandlung in Nitrat. Dazu werden die bekannten technischen Verfahren, z.B. Belebtschlammverfahren, Tropfkörperverfahren, Tauchkörperverfahren, Oxidationsgräben und dergl. eingesetzt. In diesen Anlagen erfolgt die Nitrifikation unter Mitwirkung ubiquitärer Nitrifikanten nach den Reaktionen

$$NH_4^+ + 1,5\, O_2 = NO_2^- + 2\, H + H_2O + 0,66\, kcal \qquad (Nitrosomonas)$$

und

$$2\, NO_2^- + O2 = 2\, NO_3^- + 17.5\, kcal \qquad (Nitrobacter)$$

Als besonders kostengünstige Variante wird seit einiger Zeit der belüftete Klärteich mit oxidativer Entfernung der Abwasserinhaltsstoffe favorisiert. Leider ist das Nitrifikationsvermögen derartiger Teiche teilweise sehr schlecht.

Die neueren Entwicklungen der Abwassertechnik zielen zu einem beträchtlichen Teil auf die Entfernung von schwer abbaubaren Verbindungen und auf die Entfernung der Nährstoffe Stickstoff und Phosphat neben der üblichen Elimination der leichtabbaubaren Organika ab. Dieses Verfahrensziel steht in Übereinstimmung mit den weitergehenden Ansprüchen an die Gewässerreinhaltung und mit den daraus resultierenden verschärften gesetzlichen Bestimmungen für die Einleitung von gereinigtem Abwasser in ein Gewässer.

Solche Verfahrenstechnik wird insgesamt als weitergehende Abwasserreinigung bezeichnet. Dazu sind zahlreiche technische Entwicklungen eingeleitet und eine Vielzahl von Verfahrensvorschlägen unterbreitet worden. So werden für die Phosphatelimination Fällungsreaktionen benutzt. Dazu wird in Fällungseinrichtungen durch Zusatz von Eisen-, Aluminium- und Calciumverbindungen eine phosphatreiche Flocke zur Ausfällung gebracht und aus dem Abwasserstrom abgetrennt; vgl. z.B. Lehr- und Handbuch der Abwassertechnik, Bd. IV: Biologischchemische und weitergehende Abwasserreinigung, Verlag Ernst und Sohn, Berlin 1985.

Desgleichen bemüht man sich, durch zweckmäßige technische Anordnungen Nitrifikation und anschließende Denitrifikation zur Stickstoffelimination zu kombinieren.

Dazu sind räumlich getrennte aerobe und anoxische Phasen in dem Reinigungssystem aufzubauen und in einen entsprechenden Kontakt zu bringen. Solche Anordnungen erweisen sich in vielen Fällen auch als besonders wirksam bei der Entfernung schwer abbaubarer Verbindungen. Für die Denitrifikation als Anschlußprozeß an die Nitrifikation sind kompartimentäre Anlagen errichtet worden, die über eine Steuerung des Sauerstoffgradienten anoxische Bereiche aufweisen, oder es wird nach durchgreifender Oxidation des Abwassers das entstandene Nitrat nach neuerlicher Zugabe eines Elektronendonators (Methanol, Melasse etc.) unter anoxischen Bedingungen zum elementaren Stickstoff reduziert; vgl. z.B. Lehr- und Handbuch der Abwassertechnik, l.c.

Da in neuerer Zeit großer Wert auf die weitergehende Entfernung des Ammoniaks und seiner Derivate aus dem Abwasser gelegt wird, lassen sich zur Zeit besondere Bemühungen zur befriedigenden Lösung des Stickstoffproblems insgesamt erkennen. Diese erstrecken sich teilweise schon auf die verbesserte Überführung des Ammoniaks in das wesentlich weniger giftige Nitrat, jedoch verläuft dieser Prozeß in technischen Kläranlagen oft nicht befriedigend, so zum Beispiel in belüfteten Teichanlagen. Hier wird durch den Einbau von zusätzlichen technischen Einrichtungen (Tauchtropfkörper, Festbettreaktoren etc.) versucht, die Nitrifizierung zu begünstigen; vgl. z.B. Lehr- und Handbuch des Abwassertechnik, l.c.

Zum anderen wird als erweitertes Verfahrensziel die Entfernung des Nitrats in anoxischen Phasen angestrebt. Bei Belebungsanlagen kann die Denitrifikation in getrennten Becken durchgeführt werden. Alternativ kann eine simultane Nitrifikation und Denitrifikation in einem Becken durchgeführt werden, erfordert dann aber eine entsprechend aufwendige Steuerung dieser weitergehenden Abwasserreinigung. Vgl. dazu insgesamt zum Beispiel Lehr- und Handbuch der Abwassertechnik, l.c. So sind beispielsweise aus der EP-A1-0 170 991, der US-A-4 548 712 und der DE-A1-2 910 015 Belebtschlammanlagen bekannt, in denen das mit Belebtschlamm versetzte Abwasser durch mit Luft oder Sauerstoff angereicherte Bereiche zur Nitrifikation und anoxische Bereiche zur Denitrifikation geleitet wird. Diese Anlagen erfordern einen erheblichen Konstruktionsund Steuerungsaufwand, insbesondere wegen der Notwendigkeit zur Anpassung an die Menge und die Schmutzfracht des anfallenden Abwassers.

Durch die AT-B-347 877 ist eine kaskadenartige Anordnung von Überlaufwannen oder Schrägflächen bekannt, die poröse Körper enthalten. In einem oxidierenden Bereich sind die porösen Körper mit Nitrifikanten geimpft und dem Abwasser wird ein sauerstoffhaltiges Gas entgegengeführt. In einem getrennten anaeroben Bereich sind die porösen Körper mit Denitrifikanten geimpft und dem nitrathaltigen Abwasser wird ein sauerstofffreier Gasstrom entgegengeführt.

Die nicht vorveröffentlichte EP-A-0 239 037 beschreibt eine Teichanlage zur biologischen Reinigung von verschmutztem Abwasser, die unter anderem einen Absetzteich mit einer Tiefzone im Einlaßbereich und einen anschließenden Belüftungsteich mit einer Lufteintragsvorrichtung enthält. Das im Belüftungsteich lediglich belüftete Abwasser wird zu einer ersten Denitrifikation teilweise in die sauerstoffarme Tiefzone im Einlaßbereich des Absetzteiches zurückgeführt.

Es ist seit langem bekannt, daß geeignet hergerichtete Bodenkörper, insbesondere bepflanzte Bodenkörper, die eingangs genannte weitergehende Abwasserreinigung erzielen können, wenn bestimmte Randbedingungen eingehalten werden. Den in dieser Hinsicht durchaus wirksamen Landbehandlungsverfahren sind in neuerer Zeit zusätzliche Verfahren an die Seite getreten, die sich an Bodenkörpern bzw. mineralischen Festbetten orientieren und sprunghaft höhere Leistungen erbringen, vgl. R. Kickuth: Abwasserreinigung in Mosaikmatrizen aus aeroben und anaeroben Teilbezirken in:F. Moser (Herausg.), Grundlagen der Abwasserreinigung, Schriftenreihe Wasser-Abwasser 19, München/Wien 1981, S. 639 ff.; R. Kickuth: Verfahren zum Aufbau definierter Phosphatdepots aus Abfallphosphaten, EU-PS Nr. 0028360 vom 20.4.1983. Es konnte zum Beispiel gezeigt werden, daß bepflanzte mineralische Festbetten neben einer beachtenswerten Erniedrigung der organischen Frächte auch eine sehr hohe Elimination der Nährstoffe Phosphat, Stickstoff und Schwefel bewirken können. Zum Teil werden auch beachtliche Eliminationsleistungen bei Schwermetallen und refraktären Kohlenstoffverbindungen erzielt. Problematisch bei solchen Kläreinrichtungen kann

a) ihr verhältnismäßig hoher Flächenanspruch,

b) ihre große Abhängigkeit von den Atmosphärilien, zum Beispiel Hemmung der Nitrifikation bei tiefen Außentemperaturen,

c) ihr relativ geringes hydraulisches Leistungsvermögen

sein.

So ist auch diese von den Bau- und Betriebskosten her sehr günstige und von den Leistungen her sehr wirksame Verfahrensweise nicht problemfrei, vgl. Kraft: Zur Problematik der Konstruktion von Sumpfpflanzenkläranlagen; Korrespondenz Abwasser B1 (1), S. 840-846.

Die Aufgabe der Erfindung besteht darin, ein Verfahren zur Abwasserreinigung anzugeben, bei dem mit minimalem Aufwand eine sehr wirksame Nitrifikation von Ammoniumstickstoff enthaltenden Abwässern durchgeführt werden kann, ohne daß dadurch die Entfernung von anderen Inhaltsstoffen wie Phosphaten, refraktären Kohlenstoffverbindungen, Schwermetallen und des gebildeten Nitrats in den nachfolgenden Verfahrensstufen beeinträchtigt wird.

Erfindungsgemäß wird diese Aufgabe dadurch gelöst, daß das Abwasser in der ersten Reinigungsstufe durch mindestens einen belüfteten Abwasserteich geleitet wird und dem Abwasser Schwebstoffe zugesetzt werden, die dem Abwasser eine schwach alkalische Reaktion verleihen und das Wachstum ubiquitärer Nitrifikanten fördern.

Dabei erfolgt die Umsetzung mit Luftsauerstoff in der ersten Reinigungsstufe in einem Schwerlastbereich, der mit konventionellen Einrichtungen, beispielsweise Einrichtungen, wie sie zum Beispiel in Verbindung mit Belebungsanlagen bekannt sind, aber auch Tropfkörpern, Tauchkörpern, Oxidationsgräben und dergl., zur durchgreifenden oxidativen Umwandlung der Wasserinhaltsstoffe, insbesondere der Nitrifikation, versehen wird.

Für die Nitrifikation ist die Einstellung und Aufrechterhaltung eines schwach alkalischen pH-Bereiches von Bedeutung, da die ubiquitären Nitrifikanten pH-Werte über 4,5 erfordern (Larcher, Ökologie der Pflanzen, UlmerVerlag 1973) und während der Nitratbildung Säure entsteht. Weiterhin hat sich die Anwesenheit einer hinreichenden Menge gegebenenfalls zugesetzter, insbesondere feinteiliger Schwebstoffe als förderlich für das Wachstum der ubiquitären Nitrifikanten erwiesen.

Bei einer vorteilhaften Ausführung des erfindungsgemäßen Verfahrens wird dem Abwasser, vorzugsweise im Zulaufbereich der ersten Reinigungsstufe, eine Suspension von Calciumhydroxid zudosiert. Dadurch wird nicht nur ein günstiger pH-Bereich, vorzugsweise ein pH-Bereich von 7 bis 8, eingestellt, sondern es werden gleichzeitig auch die erwünschten Schwebstoffe, zum Beispiel in Form von Calciumcarbonat und

3

gegebenenfalls auch Calciumphosphat gebildet.

Zweckmäßigerweise bildet die zweite Reinigungsstufe ein mit emersen Helophyten bzw. Limnophyten entsprechend der vorgenannten EU-PS 0028360 bepflanztes Festbett oder Schotterbett, das gegebenenfalls zusätzlich mit Belüftungseinrichtungen und Steuereinrichtungen zur Durchströmung versehen werden kann.

Überraschenderweise wurde gefunden, daß das so nitrifizierte Abwasser unmittelbar einer Weiterreinigung in einem mit emersen Helophyten bepflanzten mineralischen Festbett unterworfen werden kann, wobei weitestgehende Denitrifikation erfolgt, ohne daß dadurch die Entfernung anderer Nährstoffe, insbesondere Phosphat, sowie von refraktären Kohlenstoffverbindungen und Schwermetallen beeinträchtigt wird. Auf diese Weise läßt sich in dieser Kombination nicht nur die besondere Reinigungswirkung des mit emersen Helophyten bepflanzten mineralischen

Festbettes voll ausnutzen, sondern gleichzeitig die sehr erwünschte weitgehende Entfernung stickstoffhaltiger Abwasserverunreinigungen erreichen.

Vorteilhafterweise wird das Abwasser in der zweiten Reinigungsstufe in einem dem bepflanzten mineralischen Festbett vorgeschalteten Vorbereich belüftet, wodurch eine Restnitrifikation der restlichen Ammoniumfrächte erreicht wird.

Der erfindungsgemäße Gedanke besteht demgemäß darin, eine Nitrifikationsstufe mit einer speziell hergerichteten Restnitrifikations- und Denitrifikationsstufe zu kombinieren und den als besonders kostengünstig geltenden belüfteten Klärteich als Nitrifikationsstufe durch besondere technische Änderungen und Einrichtungen so zu optimieren, daß er bei der Nitrifikation sprunghaft bessere Leistungen zeigt.

Ein Ausführungsbeispiel einer Anlage zur Durchführung des erfindungsgemäßen Verfahrens ist in den Abbildungen dargestellt und wird nachfolgend an Hand der zugehörigen Bezugszeichen im einzelnen erläutert und besohrieben.

Es zeigen

Figur 1     eine schematische Schnittansicht der ersten Reinigungsstufe;

Figur 2     eine schematische Draufsicht der Gesamtanlage; und

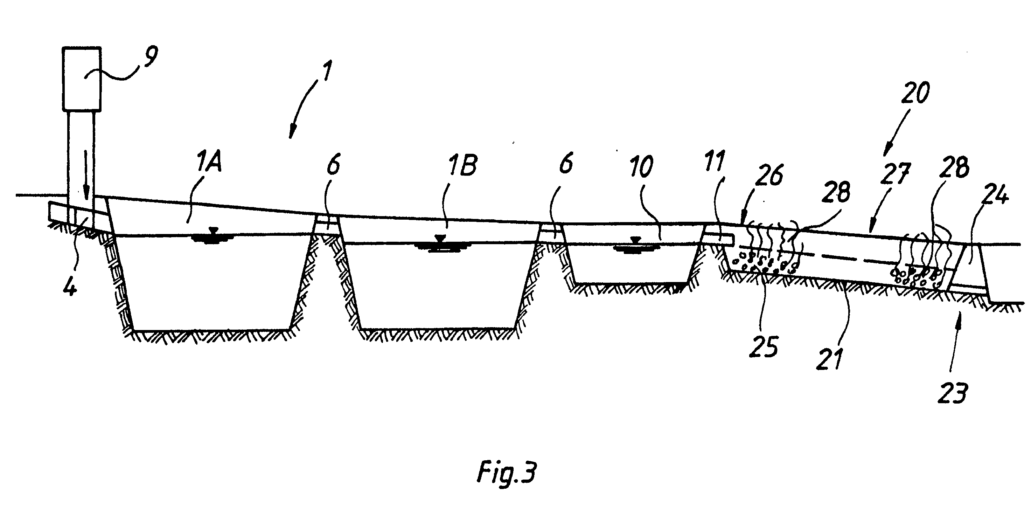

Figur 3     einen schematischen Längsschnitt durch die Gesamtanlage.

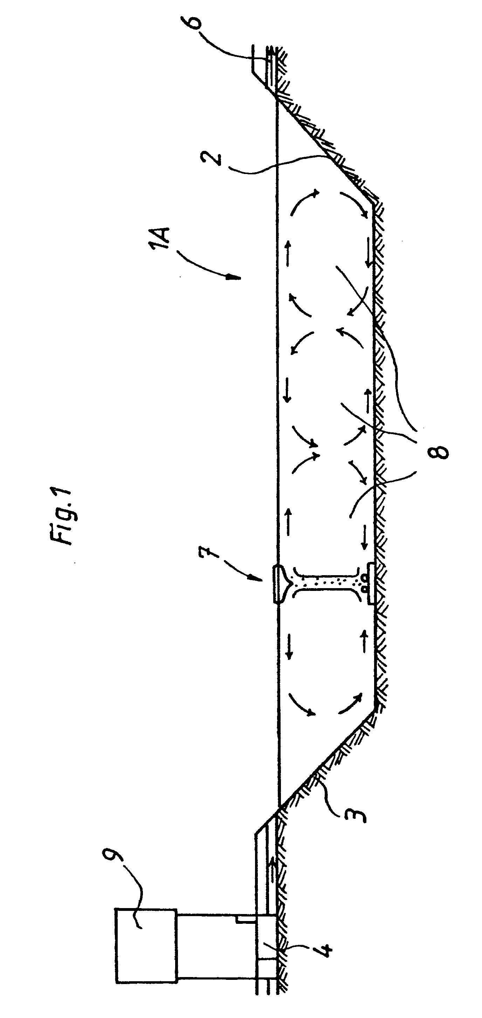

In dem dargestellten und nachstehend beschriebenen Ausführungsbeispiel wird die erste Reinigungsstufe 1 von einem geteilten Abwasserteich gebildet, von dem nur der Abwasserteich 1A in Figur 1 dargestellt ist. Die erste Reinigungsstufe 1 kann aber auch von jedem anderen geeigneten technischen Klärsystem gebildet werden, das eine durchgreifende oxidative Umwandlung der Abwasserinhaltsstoffe, besonders die Nitrifikation von Ammoniumfrächten, bewirkt, z.B. von einer Belebtschlamm-, Tropfkörper- oder Tauchkörperanlage oder auch von einem Oxidationsgraben.

Der Abwasserteich 1A ist nach den Grundsätzen für künstlich belüftete Abwasserteiche dimensioniert und besteht aus einem Erdbecken 2 mit einer Schotterschüttung 3 im Bereich der Wasserlinie zum Schutz gegen Wellenschlag. Einlaufseitig ist dem Erdbecken 2 eine Rechenanlage 4 vorgeschaltet, von der aus das Abwasser durch Zulaufrohre 5 in das Erdbecken 2 eingeleitet wird. Auslaufseitig sind Ablaufrohre 6 angeordnet.

Im ersten Drittel des Abwasserteiches befindet sich eine Belüftungseinrichtung 7 konventioneller Art, vgl. z.B. Lehr- und Handbuch der Abwassertechnik, l.c. S. 50, und bewirkt gleichzeitig eine Umwälzung des Wasserkörpers. Für den Fall, daß die Belüftung unterbrochen werden soll, muß eine zusätzliche Umwälzeinrichtung für die entsprechende Bewegung des Wasserkörpers sorgen. Durch die Lage der Belüftungseinrichtung 7 im ersten Drittel des Abwasserteiches 1A bildet sich ein generell mit 8 bezeichnetes Strömungsmuster aus. Der Sauerstoffgradient nimmt in den Wirbeln des Strömungsmuster 8 zu den Auslaufrohren 6 hin ab, so daß eventuelle Denitrifikationsprozesse im Abwasserteich 1A begünstigt werden.

Im Bereich der Rechenanlage 4 ist eine konventionelle Dosiereinrichtung 9 vorgesehen, durch die dem Abwasser Kalkmilch, d.i. eine wäßrige Suspension von Calciumhydroxid, in einer Menge zudosiert wird, die ausreicht, um in dem Abwasser einen für ubiquitäre Nitrifikanten günstigen pH-Bereich, vorzugsweise einen pH-Wert im Bereich von 7 bis 8 einzustellen. Die Suspension wird entsprechend den durch das Abwasser bestimmten Bedingungen nach Volumen und/oder Konzentration des Calciumhydroxids so dosiert, daß der gewünschte pH-Bereich eingestellt wird. Die Dosiereinrichtung 9 kann auch an jeder anderen geeigneten Stelle im Zulaufbereich des Abwasserteiches angeordnet werden. Durch die Zudosierung des Calciumhydroxids wird der für biologische Prozesse, insbesondere für die Nitrifikation abträglichen pH-Absenkung entgegengewirkt. Durch Wechselwirkung mit den Hydrogencarbonat-Ionen, die im Verlauf des BSB-Abbaues gebildet werden, entsteht im vorderen Drittel eine Fällung aus Calciumcarbonat, das durch Wasserumwälzung nach dem Strömungsmuster 8 in Suspension gehalten und frühestens im allerletzten Abschnitt der Fließstrecke zur Sedimentation gelangt. Durch die so gebildeten Schwebstoffe wird das Wachstum der ubiquitären Nitrifikanten gefördert. Gleichzeitig findet durch die heftige Wasserbewegung, verbunden mit den relativ hohen pH-Werten im Zulaufbereich, ein beträchtliches Austreiben von Ammoniak statt (stripping), das auf ca. 20 % veranschlagt werden kann.

In der ersten Reinigungsstufe 1 werden somit durch die Zudosierung der Kalkmilch sowohl hinsichtlich des pH-Wertes als auch hinsichtlich der gewünschten Schwebstoffe, die unter den Reaktionsbedingungen aus der Kalkmilch entstehen, günstige Wachstumsbedingungen für die übiquitären Nitrifikanten und somit die Oxidation von Ammoniak bzw. Ammoniumverbindungen nach den eingangs genannten Reaktionsgleichungen

$$NH_4^+ + 1,5\ O_2 = NO_2^- + 2\ H + H_2O + 0,66\ kcal \qquad (Nitrosomonas)$$

und

$$2NO_2^- + O_2 = 2\ NO_3^- + 17,5\ kcal \qquad (Nitrobacter)$$

geschaffen. Der stripping-Anteil wird aus der Dissoziationskonstanten von Ammoniumhydroxid, dem pH-Wert in der Reaktionszone und dem Partialdruck von Ammoniak über wäßrigen Lösungen abgeschätzt werden, vgl. Koppers Handbuch der Brennstofftechnik, Koppers AG, Essen 1937. Anstelle von Calciumhydroxid können auch andere basische Stoffe verwendet werden; sofern solche basischen Stoffe unter den Reaktionsbedingungen keine Schwebstoffe bilden, empfiehlt sich die Zugabe von inerten bzw. nichtsäurebildenden Schwebstoffen oder Schwebstoffsuspensionen.

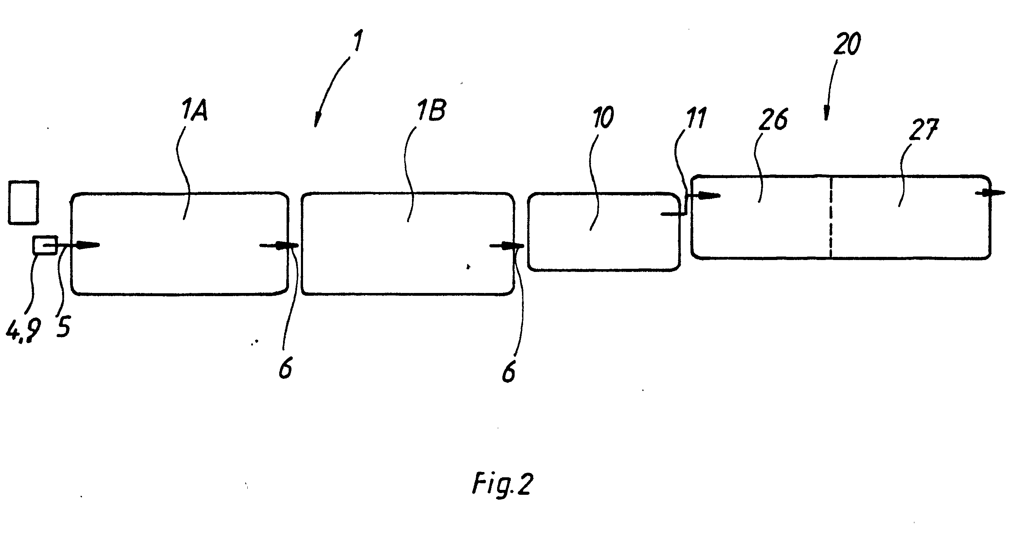

Vorteilhafterweise enthält die erste Reinigungsstufe 1, wie in Figur 2 dargestellt ist, einen Abwasserteich, der in zwei im wesentlichen in gleicher Weise aufgebaute und ausgerüstete Abwasserteiche 1A und 1B aufgeteilt ist. Beide Abwasserteiche 1A und 1B sind Erdbecken und mit einer nicht im einzelnen dargestellten Belüftungseinrichtung nach Art der Belüftungseinrichtung 7 versehen, die in den Abwasserteichen 1A und 1B das vorstehend beschriebene Strömungsmuster 8 erzeugen. Eine Dosiereinrichtung 9 für die Zugabe von Kalkmilch ist zunächst nur für den Abwasserteich 1A vorgesehen, kann aber bei Bedarf zusätzlich auch im Zulaufbereich des Abwasserteiches 1B angeordnet werden.

Die gesamte mittlere Aufenthaltszeit des mit Kalkmilch versetzten Abwassers in den Abwasserteichen 1A und 1B beträgt mindestens 5 Tage. In dem beschriebenen Ausführungsbeispiel beträgt diese gesamte mittlere Aufenthaltszeit 7.1 Tage, kann aber in Abhängigkeit von den jeweiligen Bedingungen bzw. Schmutzfrächten auch kürzer oder länger sein.

Am Auslauf des zweiten Abwasserteiches 1B fällt ein Abwasser an, dessen BSB5-Wert wesentlich erniedrigt ist, dessen Ammoniakstickstoff im wesentlichen in Nitrat umgewandelt wurde und dessen Phosphatgehalt reduziert ist, vgl. die weiter unten angegebenen Daten.

Wie weiter in Figur 2 dargestellt ist, tritt das vorbehandelte und aus dem Abwasserteich 1B erhaltene Abwasser zunächst in einen Nachklärteich 10 über, dem sich die nachfolgend beschriebene zweite Reinigungsstufe 20 anschließt. Dieser Nachklärteich 10 stellt ebenfalls ein Erdbecken dar; seine Zulaufrohre werden von den Ablaufrohren 6 des Abwasserteiches 1B gebildet und seine Tiefe beträgt ca. 1m. In dem Nachklärteich 10 sedimentieren insbesondere der aus dem Abwasserteich 1B übergetretene Belebtschlamm und andere suspendierte Partikel. Eine Belüftungseinrichtung kann im Bedarfsfalle auch in Verbindung mit dem Nachklärteich 10 vorgesehen werden, ist aber in der Regel nicht notwendig. Vom Nachklärteich 10 führt ein Ablauf, z.B. aus Ablaufrohren zur zweiten Reinigungsstufe 20. Die mittlere Aufenthaltszeit des Abwassers im Nachklärteich 10 beträgt ca. 1 bis 2 Tage.

Das aus der ersten Reinigungsstufe 1 bzw. dem Nachklärteich 10 austretende, weitgehend nitrifizierte Abwasser wird nunmehr der zweiten Reinigungsstufe 20 übergeben, in der gegebenenfalls noch vorhandene Ammonium-Restfrächte eliminiert und Nitrat zu elementarem Stickstoff reduziert wird.

Die zweite Reinigungsstufe 20 besteht aus einem Erdbecken 21 mit einem Zulauf 22, der an den Ablauf 11 des Nachklärteiches 10 angeschlossen ist, und mit einem Auslauf 23. Das Erdbecken 21 ist zum Auslauf 23 hin geneigt, und am Auslauf 23 sind Mittel wie ein konventioneller höhenverstellbarer Auslaß 24 vorgesehen, un einen vorgegebenen hydraulischen Gradienten und damit eine vorgegebene mittlere Aufenthaltszeit des Abwassers in der zweiten Reinigungsstufe 20 einzustellen. Bei starkem Längsgefälle kann die zweite Reinigungsstufe 20 durch eine dichte Querwand unterteilt werden, an der sich das Abwasser staut. Es erfolgt dann eine Überleitung durch Drainagerohre.

Das Erdbecken 21 enthält ein Schotterbett oder Festbett 25 und ist in einen Vorbereich 26 und einen Hauptbereich 27 unterteilt, die funktionell voneinander getrennt sind, aber konstruktiv eine Einheit bilden. Im Vorbereich 26 werden noch vorhandene Ammonium-Restfrächte durch Nachbelüftung entfernt. Diese kann natürlich durch Diffusion durch die Wasseroberfläche oder künstlich durch an Druckluft angeschlossene konventionelle Belüftungskerzen erfolgen. Ist in der zweiten Reinigungsstufe 20 vorzugsweise Denitrifikation - neben P-Einbindung und Entfernung von refraktären C-Verbindungen - zu leisten, so beschränkt sich die Nachbelüftung nur auf die allerersten Abschnitte dieser zweiten Reinigungsstufe 20 und kann gegebenenfalls gänzlich unterbleiben. Treten jedoch noch beträchtliche Mengen an Ammoniumstickstoff aus der ersten Reinigungsstufe 1 in die zweite Reinigungsstufe 20 über, so kann auch der Hauptbereich 27 der zweiten Reinigungsstufe 20 auf der gesamten Laufstrecke mit Belüftungseinrichtungen versehen werden. Diese werden dann im Regelfall als horizontal im Schotterkörper verlaufende Belüftungskerzen konventioneller Bauart ausgebildet.

Im Hauptbereich 27 ist das Schotterbett oder Festbett 25 mit Limnophyten bzw. emersen Helophyten 28 der in der vorgenannten EU-PS 0028360 aufgeführten Arten bepflanzt, insbesondere Großröhrichtarten, unter denen das Gemeine Rohrschilf (Phragmites australis) besonders herausgehoben werden muß. Ansonsten sind jedoch zahlreiche Anpassungen an die gegebene standörtliche und abwassertechnische Situation möglich.

Die Funktion der Helophyten 28 besteht nun darin, daß sie

1. über photosynthetisch erzeugte Kohlenstoffverbindungen in Form ihrer Wurzeln und Rhizome Reduktionsäquivalente für die Denitrifikation gleichmäßig zur Verfügung stellen,

2. durch den Rhizosphäreneffekt dichte und spezifische Mikroorganismen-Gesellschaften im durchwurzelten Schotterbett oder Festbett 25 aufbauen und

3. über den wohlbekannten Sauerstofftransfer durch das Sproßaerenchym in dem Wurzel- und Rhizombereich aerobe Mikrokompartimente in der unmittelbaren Umgebung der unterirdischen Organe aufbauen, in denen aerob zu entfernende Restfrächte abgebaut werden können.

Die Bepflanzung des Festbettes oder Schotterbettes 25 erfolgt je nach Jahreszeit mit Rhizomen oder Containerpflanzen; die Einfahrphase beträgt ca. 3 Jahre.

Über den im bepflanzten Schotterbett oder Festbett 25 (Korngröße im Bereich von 8 bis 32 mm) erfolgenden Abschluß des Wasserkörpers vom Kontakt mit der Außenluft und durch die Sauerstoffzehrung des durch Wurzeln und Rhizome der verwendeten Pflanzen erfolgenden Eintrages von reduzierendem organischen Material geht - je nach Wahl der Belüftung - der aerobe Zustand der fließenden Welle in einen anoxischen Zustand über, in dem die Freisetzung von elementarem Stickstoff beginnt.

Auch dieser Prozeß wird durch hohe pH-Werte begünstigt, und es ist daher für das erfindungsgemäße Verfahren günstig, das Festbett oder Schotterbett 25 aus Kalk/Dolomitschotter aufzubauen. Schon in dieser Ausstattung wird auch die Ausfällung des Phosphats als Oktocalciumphosphat begünstigt. Die Phosphatfällung kann man weiter dadurch fördern, daß man eisenschüssiges Material verwendet oder eisenhaltiges Material als zweite Komponente dem Schotterbett oder Festbett 25 beimischt.

Die mittlere Aufenthaltszeit in der zweiten Reinigungsstufe 20 wird am Auslauf 23 eingestellt und ist durch die Restbefrachtung bestimmt, die ihrerseits von der mittleren Aufenthaltszeit des Abwassers in der ersten Reinigungsstufe 1 abhängig ist.

Insgesamt zeigt die zweite Reinigungsstufe 20 ein außerordentlich komplexes und variables Wirkungsgefüge, das sich auf die unterschiedlichen Abwassersituationen einstellt und einstellen läßt. Die Korngrößen (8 bis 32 mm) solcher bepflanzten mineralischen Festbetten sind wohl bekannt. Nach ihnen lassen sich diese Reinigungsstufen verläßlich dimensionieren.

Voraussetzung für eine kontrollierte und gleichmäßige Wirkungsweise des bepflanzten Festbettes oder Schotterbettes 25 ist die dauernde und vollständige Hydromorphie, d.h. die volle Wassersättigung des Porengefüges. Diese wird durch Steuerung des hydraulischen Gradienten am Auslauf 23 sichergestellt, beispielsweise mit Hilfe des vorstehend erwähnten höhenverstellbaren Auslasses 24.

Insgesamt lassen sich nach dem erfindungsgemäßen Verfahren Ablaufwerte erzielen, die durch folgende Angaben charakterisiert werden:

| | |
|---|---|
| BSB 5 | ≪ 10 mg/l |
| CSB | ≪ 50 mg/l |
| $NH_4$-N | ≪ 5 mg/l |
| $NO_3$-N | < 10 mg/l |
| ges. P | < 1 mg/l |

Elimination
von E-Coli,
coliformen Keimen
und Salmonellen ≫ 99 %

Nachstehend werden die Daten des Ausführungsbeispiels im einzelnen angegeben.

Bemessung der Klärteiche

## 1. Berechnungsgrundlagen

### 1.1 Trockenwetterzufluß

### Schmutzwasser:

| | | | |
|---|---|---|---|
| Einwohnergleichwerte | EGW | = 1500 | – |
| spez. Abwasseranfall | qs | = 150 | l/EGW/d |
| Verteilungszeitraum | dt | = 8 | h/d |
| Schmutzwasserzufluß | Qh | = 7.8 | l/s |
| | | = 225 | cbm/d |

### Fremdwasser:

| | | | |
|---|---|---|---|
| ca. 100 % des häuslichen Abwassers | Qf | = 225 | cbm/d |
| | | = 2.6 | l/s |

### Trockenwetterzufluß:

| | | |
|---|---|---|
| Qt | = 10.4 | l/s |
| | = 450 | cbm/d |

### 1.2 Schmutzfrachten

### BSB5

| | | | |
|---|---|---|---|
| spezifische Menge | s | = 60 | g/EGW |
| 60x1500/1000 | S | = 90 | kg/d |
| 90/10.4/3.6/8x1000 | S | = 300 | mg/l |
| über 24 h verteilt: 90/450x1000 | S | = 200 | mg/l |

### $NH_4$-N

| | | | |
|---|---|---|---|
| spezifische Menge | s | = 12 | g/EGW |
| 12x1500/1000 | S | = 18 | kg/d |
| 18/10.4/3.6/8x1000 | S | = 60.1 | mg/l |
| über 24 h verteilt: 18/450x1000 | S | = 40 | mg/l |

7

2. Kläranlagenteile

2.1 Vorbauwerke (Rechen)

Zur Entfernung von größeren Schmutzteilen wird ein Gegenstromrechen vor den Abwasserteichen 1A und 1B angeordnet. Die Rechenanlage 4 arbeitet automatisch in Abhängigkeit von dem Belegungsgrad des Rechens. Das Rechengut wird in einen Container befördert und anschließend auf einer Deponie ordnungsgemäß beseitigt.

| Spaltweite | $e$ | $=$ | 20 | mm |
| Stabstärke | $s$ | $=$ | 10 | mm |
| Rechenbreite | $br$ | $=$ | 0.4 | m |
| Rechentiefe | $t$ | $=$ | 0.6 | m |
| Rechenhöhe | $h$ | $=$ | 0.5 | m |

Rechengutanfall:

| spezifischer Anfall | $rg$ | $=$ | 8 | l/EGW/a |
| jährlicher Anfall 8x1500/1000 | $Rg$ | $=$ | 12 | cbm/a |
| mittl. täglicher Anfall 12/365x1000 | $Rg$ | $=$ | 33 | l/d |

Erste Reinigungsstufe 1
als belüftete Klärteichanlage

2.2 belüftete Klärteiche

| | | | | |
|---|---|---|---|---|
| gewählte spezifische Raumbelastung | BR | = | 30 | gBSB5/d |
| erforderliches Teichvolumen 90x1000/30 | Verf | = | 3000 | cbm |

Es werden zwei Teiche mit jeweils gleicher Oberfläche angeordnet.

| | | | | |
|---|---|---|---|---|
| Wassertiefe der Teiche | h | = | 2.0 | m |
| Länge eines Teiches | L | = | 46.0 | m |
| Breite eines Teiches | B | = | 23.0 | m |
| Böschungsneigung | n | = | 2 | – |
| Volumen eines Teiches | V | = | 1607 | cbm |
| Freibord | hf | = | 0.40 | m |
| Gesamttiefe | h | = | 2.4 | m |
| Länge eines Teiches an der Oberkante | L | = | 47.6 | m |
| Breite eines Teiches an der Oberkante | B | = | 24.6 | m |
| Gesamtvolumen | V | = | 2052 | cbm |
| Aufenthaltszeit bei Trockenwetterzufluß 1607x2/450 | ta | = | 7.1 | d |

2.3 Nachklärteich 10

| | | | | |
|---|---|---|---|---|
| Wassertiefe | h | = | 1.0 | m |
| Oberfläche | A | = | 500 | qm |
| Volumen | V | = | 500 | cbm |
| Aufenthaltszeit ca. | ta | = | 1.0 | d |

Zweite Reinigungsstufe 20
als bepflanztes Schotterbett 25

2.4 Schotterbett 25

| Tiefe | h | = | 0.6 m |
|---|---|---|---|
| Oberfläche | A | = | 700 qm |
| Volumen | V | = | 420 cbm |
| Körnung des Schotters | dmin | = | 8 mm |
| | dmax | = | 32 mm |
| mittlerer Korndurchmesser | d | = | 25 mm |

Die mittlere Fließgeschwindigkeit in Steinschüttungen ermittelt sich nach einer Studienarbeit am Institut für Hydraulik und Hydrologie, Technische Hochschule Darmstadt, wie folgt:

$$v = -a/2/b + sqr((a/2/b)xx2 + J/b)$$

mit a $\quad$ = c1xny/g/d/d
$\quad$ b $\qquad$ = c2/g/d

Die Konstanten c1 und c2 werden in Anlehnung an eine Einkomponenten-Kugelschüttung wie folgt gewählt:
$\quad$ c1 = 1250; c2 = 20
Bei einem Längsgefälle von 2 % ergibt sich folgende mittlere Fließgeschwindigkeit:

$$a = 1250x1.3x10-6/g/.025/.025 = 0.265$$
$$b = 20/g/.025 = 81.55$$
$$v = -.265/2/81.55 + sqr((0.265/2/81.55)xx2 + .002/81.55) = 0.0036 \ m/s$$

| Einlaufbreite | | | 7.0 | m |
|---|---|---|---|---|
| Einlaufhöhe | h | = | 0.6 | m |
| maximaler Durchfluß .0036x7x.6x1000 | Q | = | 15.1 | l/s |

Der Durchfluß wird reguliert und liegt zwischen 0 und 15.1 l/s.

3. Reinigungsleistung
Erste Reinigungsstufe 1

3.1 Reinigungsleistung des Abwasserteiches 1A

BSB5:

| | | | | |
|---|---|---|---|---|
| Flächenbelastung 90/23/46x1000 | FB | = | 85 | g/qm |
| Reinigungsleistung | eta | = | 72.4 | % |
| Schmutzfracht im Ablauf (1-.724)x90 | Sab | = | 24.8 | kgBSB5/d |
| (1-.724)x200 | | = | 55.2 | mgBSB5/l |
| Aufenthaltszeit im ersten Teich 1607/450 | ta | = | 3.57 | d |
| Abbau an BSB in 3.57 Tagen (90-24.8)x3.57 | BSBab | = | 233 | kgBSB5 |
| Produktion von $CO_2$ 233x1.375 | | = | 320 | $kgCO_2$ |
| Produktion von $CaCO_3$ 1 g $CO_2$ — 1.91 g $CaCO_3$ | | | | |
| 320x1.91 | | = | 611 | $kgCaCO_3$ |

$NH_4$-N:

| | | | | |
|---|---|---|---|---|
| Reinigungsleistung: durch Ablagerung im Primär-schlamm | eta | = | 15 | % |
| Reinigungsleistung durch stripping | eta | = | 20 | % |
| Schmutzfracht 18x(1-.35) | S | = | 11.7 | $kgNH_4$-N/d |

Reinigungsleistung durch
im Abwasser enthaltene
Bakterien

| | | | |
|---|---|---|---|
| Oberfläche des Abwasser-teiches 1A 23x46 | | = | 1058 qm |
| freie Oberfläche von $CaCO_3$ | 10 bis 50 qm/g | | |
| Gesamtoberfläche von $CaCO_3$ | 10x1000x611 | = | $6.1 \times 10^6$ qm |

11

```
Annahme:
1 o/oo der Fläche steht den Nitrifi-
kanten aus Aufwuchsfläche zur Ver-
fügung

bewachsene Oberfläche von CaCO_3
6.1x1000000/1000                            =   6100   qm

Gesamtfläche   1058 + 6100        A         =   7158   qm

Flächenbelastung:
11.7/7158x1000                    FB        =    1.6   g/qm

Reinigungsleistung
infolge der Flächenbelastung      eta       =    50 %

Gesamte Reinigungsleistung
im ersten Teich 50 + 15 + 20      eta       =    85 %

Schmutzfracht im Ablauf
(1-.850)x18                       Sab       =    2.7   kgNH_4-N/d
(1-.850)x40                                 =    6.0   mgNH_4-N/1
```

3.2 Reinigungsleistung des Abwasserteiches 1B

```
BSB5 :

Flächenbelastung
24.8/23/46x1000                   FB        =   23.4   g/qm

Reinigungsleistung               eta        =   81.2   %

Schmutzfracht im Ablauf
(1-.812)x24.8                     Sab        =    4.7   kgBSB5/d
(1-.812)x55.2                                =   10.4   mgBSB5/1
```

```
NH_4-N :

Es wird davon ausgegangen, daß nur an
der Oberfläche des Abwasserteiches 1B
eine Nitrifikation stattfindet.

Flächenbelastung                  FB        =    2.6   g/qm
2.70/23/46x1000

Reinigungsleistung:
infolge der Flächenbelastung      eta       =    15 %

Schmutzfracht im Ablauf
(1-.15)x2.7                       Sab        =    2.3   kgNH_4-N/d
(1-.15)x6.0                                  =    5.1   mgNH_4-N/1
```

Die Reinigungsleistung eta errechnet sich aus der Schmutzfracht im Zulauf Szu und der Schmutzfracht im Ablauf Sab nach der Formel

$$\text{Reinigungsleistung in \% } = \frac{Szu - Sab}{Szu}$$

Zur Reinigungsleistung durch Ablagerung vgl. Abwasserreport Nr. 3, Hessische Landesanstalt für Umwelt, vom 1. März 1985.

Die Reinigungsleistung durch stripping wurde abgeschätzt aus der Dissoziationskonstanten von Ammoniumhydroxid, dem pH-Wert und dem Partialdruck von Ammoniak über wäßrigen Lösungen (Koppers Handbuch der Brennstofftechnik, l.c.).

Die freie Oberfläche von Calciumcarbonat wurde für frisch gefälltes Calciumcarbonat einer Teilchengröße im Bereich von 2 bis 200 m$\mu$ berechnet.

Nitrifikanten wachsen auf allen Oberflächen bei pH $\geqslant$ 4.5; vgl. Larcher, Ökologie der Pflanzen, Ulmer-Verlag 1973.

Die Reinigungsleistung eta = 50 % durch die Nitrifikanten wurde entnommen aus: Bericht über die Versuche mit dem BIO-NET-Tauchkörper zur biologischen Reinigung von kommunalem Abwasser, Institut für Siedlungswasserbau Wassergüte und Abfallwirtschaft der Universität Stuttgart, Abteilung Abwassertechnik, 29.9.1983.

Zweite Reinigungsstufe 20

3.3 Schotterbett 25 (Reinigungsleistung und Bemessung)

```
Zulauffrachten:

BSB5  :                              S    =  4.7 kgBSB5/d

NH4-N :                              S    =  2.3 kgNH4-N/d

NO3-N :
Umwandlung von NH4-N in NO3-N

in der ersten Reinigungsstufe 1
= 18x(1-.35)-2.3                          =  9.4 kgNH4-N/d
NO3-N                                S    =  9.4 kgNO3-N/d


Ablauffrachten:
(entspr. Gewässergüteklasse II)

BSB5                                 Sab =  6.0 mgBSB5/l
6.0x450/1000                              =  2.7 kgBSB5/d
Abbaurate 4.7-2.7                         =  2.0 kgBSB5/d
Abbauleistung 2.0/4.7x100                 =   43 %

NH4-N                                Sab =  1.7 mgNH4-N/l

1.7x450/1000                              =  0.8 kgNH4-N/d
Abbaurate 2.3-0.8                         =  1.5 kgNH4-N/d
Abbauleistung 1.5/2.3x100                 =   65 %

NO3-N                                Sab =  6.0 mgNO3-N/l
6.0x450/1000                              =  2.7 kgNO3-N/d
Abbaurate 9.4+0.8-2.7                     =  7.5 kgNO3-N/d
Abbauleistung 7.5/(9.4+0.8)x100           =   74 %
```

3.3.1 Vorbereich 26

```
spez. Sauerstoffbedarf
für BSB5                                        =   1.5 kgO2/kgBSB5
für NH4-N                                       = 4.57 kgO2/kgNH4-N


Sauerstoffbedarf:
2.0x1.5 + 1.5x4.57                              = 9.86 kgO2/d

Sauerstoffsättigung                            = 9.00 mg/l

vorh. Sauerstoff bei Sättigung
9x450/1000                                     = 4.05 kgO2
```

Abbaufunktion des Sauerstoffs in Abhängigkeit von der Fließstrecke nach Umdruck A II, Institut für Wasserversorgung, Abwasserbeseitigung und Stadtbauwesen, Technische Hochschule Darmstadt:

$DO_2 = L \times (1-\exp(-k1 \times t)) = L \times (1-\exp(k1 \times V/Q))$

mit $V = B \times L \times H \times n$

| | |
|---|---|
| $DO_2$ | = Sauerstoffzehrung |
| k1 | = Abbaugeschwindigkeitsbeiwert |
| L | = Fließstrecke |
| t | = Aufenthaltszeit |
| V | = Volumen |
| Q | = Durchfluß |
| B | = Breite des Fließquerschnittes |
| H | = Höhe des Fließquerschnittes |
| n | = Porenvolumen des Schotterbettes |

mit

| | | | |
|---|---|---|---|
| B | = | 20 | m |
| H | = | 0.6 | m |
| n | = | 0.5 | - |
| Q | = | 450 | cbm/d |
| k1 | = | 0.77 | /d |
| $DO_2$ | = | 9 | mg/l |

ergibt sich für die Fließstrecke

$9.o = L \times (1 - \exp(-0.103 \times L))$

| Lösung iterativ: | L | = | 32 | m |
|---|---|---|---|---|

| Oberfläche des Vorbereichs 20x32 | A | = | 640 | qm |
|---|---|---|---|---|

zusätzlicher Sauerstoffeintrag durch die Pflanzen nach "Cultivating Reeds for Root Zone Treatment of Sewage, WRC, Grange-over-Sands, Cumbria 1985"

| | $O_2$ | = | 10 | g/qm/d |
|---|---|---|---|---|
| 10x640/1000 | | = | 6.4 | $kgO_2$/d |

| Sauerstoffdefizit 9.86 - 6.4 | $dO_2$ | = | 3.46 | $kgO_2$/d |
|---|---|---|---|---|

Es wird eine zusätzliche Belüftungseinrichtung angeordnet, die diesen Sauerstoffbedarf abdeckt. Der Sauerstoffgehalt des Wassers muß folgenden Wert erreichen:

| 3.46/450x1000 | $O_2$ | = | 7.7 | $mgO_2$/l |
|---|---|---|---|---|

### 3.3.2 Haupt- oder Denitrifikationsbereich 27

$NO_3$-N

| Abbaurate | | = | 2.7 | $kgNO_3$-N/d |
|---|---|---|---|---|

| spez. Abbauleistung | dS | = | 10 | $toNO_3$-N/ha |
|---|---|---|---|---|
| | | = | 2.74 | $gNO_3$-N/qm/d |

| Flächenbedarf 2.7/2.74x1000 | A | = | 985 | qm |
|---|---|---|---|---|

gewählt:

| Bettbreite | B | = | 20 | m |
|---|---|---|---|---|
| Bettlänge | L | = | 50 | m |

### 2.5 Sauerstoffbedarf

### 2.5.1 Sauerstoffbedarf in den Abwasserteichen 1A, 1B

BSB5 Abbau in den Teichen

$$90.0 - 4.7 \qquad S \quad = \quad 85.3 \quad \text{kgBSB5/d}$$

erforderlicher Sauerstoffbedarf $O_2$ = 1.5 $\text{kgO}_2/\text{kgBSB5}$

$$85.3 \times 1.5 \qquad O_2 \quad = \quad 128 \quad \text{kgO}_2/\text{d}$$

Feinblasige Belüftung:

Sauerstoffzufuhr bei
mittleren Verhältnissen     =    8   $\text{gO}_2/\text{cbm/m}$

Einblastiefe     =   2.0   m

Lufteintrag
$$128 \times 1000 / 2.0 / 8 \qquad = \quad 8000 \quad \text{cbm/d}$$
$$8000/24 \qquad = \quad 333 \quad \text{cbm/h}$$

2.5.2 Sauerstoffbedarf in dem Schotterbett 25

$NH_4$-N Abbau im Schotterbett

$$15.3 - 1.5 \qquad S \quad = \quad 13.8 \quad \text{kgNH}_4\text{-N/d}$$

erforderlicher Sauerstoffbedarf     $O_2$ = 4.57 $\text{kgO}_2/\text{kgNH}_4\text{-N}$

$$13.8 \times 4.57 \qquad O_2 \quad = \quad 63.1 \quad \text{kgO}_2/\text{d}$$

$$63.1 / 1.45 \qquad O_2 \quad = \quad 43.5 \quad \text{cbmO}_2/\text{d}$$

Sauerstoffeintrag in ein bepflanztes
Schotterbett:     $O_2$ = 20 $\text{g/qm/d}$

maximaler Wert     $O_2$ = 59 $\text{g/qm/d}$

vorhandene Fläche     A = 700 qm

Sauerstoffeintrag     $O_2$ = 14 $\text{kgO}_2/\text{d}$
bei 20 g/d     = 9.7 $\text{cbmO}_2/\text{d}$
bei 59 g/d     = 41.3 $\text{kgO}_2/\text{d}$
    = 28.5 $\text{cbmO}_2/\text{d}$

Sauerstoff im Zulauf, der
zur Nitrifikation zur Verfügung steht:     = 5 mg/l

Zulaufmenge     = 450 cbm/d

Sauerstoffreserve
$$5/1000 \times 450 \times 1.45 \qquad = \quad 3.3 \quad \text{cbmO}_2/\text{d}$$

Um den Sauerstoffbedarf zur Nitrifikation zu decken, werden in den Schottergraben Belüftungskerzen eingebaut.

16

Die Belüftung wird für den minimalen Sauerstoffeintrag durch die Pflanzen ausgelegt. Der Bedarf wird entsprechend gesteuert.

```
Sauerstoffdefizit
43.5 - 9.7 - 3.3                    =    30.5   cbmO₂/d
30.5x1.45                          =    44.2   kgO₂/d

Feinblasige Belüftung:

Sauerstoffzufuhr bei
mittleren Verhältnissen            =       8   gO₂/cbm/m

Einblastiefe                       =     0.6   m

Lufteintrag
44.2 x 1000 / 0.6 / 8              =    9208   cbm/d

9208/24                            =     384   cbm/h
```

### 2.5.3 Bemessung der Belüfterstation

Es werden zwei Belüftungsaggregate angeordnet. Das erste dient zur Belüftung der Abwasserteiche 1A, 1B. Das zweite wird für die Belüftung des Schotterbettes 25 ausgelegt und kann bei Bedarf als Reserveaggregat für die Belüftung der Abwasserteiche 1A, 1B herangezogen werden.

17

| Fördermenge (maximal) | Q | = | 384 | cbm/h |
| gewählt: | Q | = | 400 | cbm/h |
| Länge der Leitung | L | = | 170 | m |
| Durchmesser | DN | = | 100 | mm |
| mittl. Strömungsgeschwindigkeit | vm | = | 14.15 | m/s |

Reibungsverluste:

| Rauhheit | ks | = | 1.0 | mm |
| Widerstandsbeiwert | lamda | = | 0.02 | - |

Reibungsverlust:
0.02x170/.100x14.15x14.15/2x1.205

| | DelP | = | 4102 | N/qm |

Einzelverluste:

| 10 Krümmer | ZetKr | = | 0.14 | - |
| 5 T-Stücke | ZetT | = | 1.28 | - |
| 5 Schieber | ZetS | = | 0.40 | - |
| Einlauf | ZetE | = | 0.50 | - |
| Auslauf | ZetA | = | 1.00 | - |
| 10x.14 + 5x1.28 + 0.50 + 1.0 | ZetG | = | 9.3 | - |

Druckverlust:
| 9.3x12.38x12.38/2x1.205 | DelE | = | 860 | N/qm |

Gesamtverlust:
| 4102 + 860 | DelG | = | 4962 | N/qm |
| 4962x1.02x0.000001 | | = | 0.05 | at |
| | | = | 0.50 | mWS |

| Sicherheitszuschlag | DelS | = | 0.20 | mWS |
| Teichtiefe | t | = | 2.40 | m |

manometrische Förderhöhe:
| 2.40 + 0.50 + 0.20 | Hman | = | 3.10 | mWS |

erforderliche Gebläseleistung:

| Luftstrom | Q | = | 400 | cbm/h |
| | | = | 6.6 | cbm/min |
| Druckhöhe | DelP | = | 3.1 | mWS |
| | | = | 310 | mbar |

**Patentansprüche**

**Patentansprüche für folgende Vertragsstaaten : AT, ES, FR, GB, IT**

1. Verfahren zur Reinigung von Abwässern, die Ammoniak bzw. Ammoniumverbindungen enthalten, wobei in einer ersten Reinigungsstufe die überwiegende Menge des Ammoniaks bzw. der Ammoniumverbindungen unter aeroben Bedingungen in Gegenwart von Nitrifikanten zu Nitrat oxidiert und in einer nachfolgenden zweiten Reinigungsstufe das in der ersten Reinigungsstufe gebildete Nitrat unter anaeroben Bedingungen zu Stickstoff umgesetzt wird,

dadurch gekennzeichnet, daß das Abwasser in der ersten Reinigungsstufe durch mindestens einen belüfteten Abwasserteich geleitet wird und dem Abwasser Schwebstoffe zugesetzt werden, die dem Abwasser eine schwach alkalische Reaktion verleihen und das Wachstum ubiquitärer Nitrifikanten fördern.

2. Verfahren nach Anspruch 1, dadurch gekennzeichnet, daß dem Abwasser Calciumhydroxid zugesetzt wird, durch das unter den Reaktionsbedingungen ein für das Wachstum der ubiquitären Nitrifikanten günstiger pH-Bereich im Abwasser eingestellt wird und Schwebstoffe gebildet werden, die das Wachstum der ubiquitären Nitrifikanten fördern.

3. Verfahren nach Anspruch 2, dadurch gekennzeichnet, daß das Calciumhydroxid dem Abwasser im Zulaufbereich der ersten Reinigungsstufe in Suspension zudosiert wird und durch die Dosierung im Abwasser ein pH-Wert im Bereich von 7 bis 8 eingestellt wird.

4. Verfahren nach einem der Ansprüche 1 bis 3, dadurch gekennzeichnet, daß das Abwasser im ersten Drittel des Abwasserteiches künstlich belüftet und durch die künstliche Belüftung nach einem vorbestimmten Strömungsmuster umgewälzt wird.

5. Verfahren nach einem der vorstehenden Ansprüche, dadurch gekennzeichnet, daß das Abwasser mindestens einen Abwasserteich mit einer vorbestimmten mittleren Aufenthaltszeit durchsetzt und in die zweite Reinigungsstufe übertritt.

6. Verfahren nach einem der Ansprüche 1 bis 5, dadurch gekennzeichnet, daß das Abwasser in der zweiten Reinigungsstufe ein mit emersen Helophyten bepflanztes, im wesentlichen vollständig hydromorphes, mineralisches Festbett durchströmt.

7. Verfahren nach Anspruch 6, dadurch gekennzeichnet, daß die emersen Helophyten aus der Gruppe der Großröhrichtarten ausgewahlt werden.

8. Verfahren nach Anspruch 6 oder 7, dadurch gekennzeichnet, daß das Abwasser die zweite Reinigungsstufe mit einer vorgegebenen mittleren Aufenthaltszeit durchsetzt.

9. Verfahren nach Anspruch 8, dadurch gekennzeichnet, daß die mittlere Aufenthaltszeit des Abwassers in der zweiten Reinigungsstufe durch Steuerung des hydraulischen Gradienten und in Abhängigkeit von der Aufenthaltszeit in der ersten Reinigungsstufe eingestellt wird.

10. Verfahren nach einem der Ansprüche 6 bis 9, dadurch gekennzeichnet, daß das mineralische Festbett aus Kalk oder Dolomit mit einer Korngröße im Bereich von 8 bis 32 mm ausgewahlt wird.

11. Verfahren nach Anspruch 10, dadurch gekennzeichnet, daß dem mineralischen Festbett eisenhaltiges Material zugemischt wird.

12. Verfahren nach einem der Ansprüche 6 bis 11, dadurch gekennzeichnet, daß das Abwasser im Bereich des bepflanzten mineralischen Festbettes belüftet wird.

13. Verfahren nach einem der Ansprüche 6 bis 12, dadurch gekennzeichnet, daß das Abwasser in einem dem bepflanzten mineralischen Festbett vorgeschalteten Vor-bereich belüftet wird.

14. Verfahren nach einem der vorstehenden Ansprüche, dadurch gekennzeichnet, daß zwischen dem mindestens einen Abwasserteich und der zweiten Reinigungsstufe ein Nachklärteich angeordnet ist.

15. Verfahren nach einem der Ansprüche 1 bis 14, dadurch gekennzeichnet, daß der ersten Reinigungsstufe ein Rechenwerk vorgeschaltet wird.

EP 0 247 519 B1

**Patentansprüche für folgenden Vertragsstaat : DE**

1. Verfahren zur Reinigung von Abwässern, die Ammoniak bzw. Ammoniumverbindungen enthalten, wobei in einer ersten Reinigungsstufe die überwiegende Menge des Ammoniaks bzw. der Ammoniumverbindungen unter aeroben Bedingungen in Gegenwart von Nitrifikanten zu Nitrat oxidiert und in einer nachfolgenden zweiten Reinigungsstufe das in der ersten Reinigungsstufe gebildete Nitrat unter anaeroben Bedingungen zu Stickstoff umgesetzt wird,

   dadurch gekennzeichnet, daß das Abwasser in der ersten Reinigungsstufe durch mindestens einen belüfteten Abwasserteich geleitet wird und dem Abwasser Schwebstoffe zugesetzt werden, die dem Abwasser eine schwach alkalische Reaktion verleihen und das Wachstum ubiquitärer Nitrifikanten fördern.

2. Verfahren nach Anspruch 1, dadurch gekennzeichnet, daß dem Abwasser Calciumhydroxid zugesetzt wird, durch das unter den Reaktionsbedingungen ein für das Wachstum der ubiquitären Nitrifikanten günstiger pH-Bereich im Abwasser eingestellt wird und Schwebstoffe gebildet werden, die das Wachstum der ubiquitären Nitrifikanten fördern.

3. Verfahren nach Anspruch 2, dadurch gekennzeichnet, daß das Calciumhydroxid dem Abwasser im Zulaufbereich der ersten Reinigungsstufe in Suspension zudosiert wird und durch die Dosierung im Abwasser ein pH-Wert im Bereich von 7 bis 8 eingestellt wird.

4. Verfahren nach einem der Ansprüche 1 bis 3, dadurch gekennzeichnet, daß das Abwasser im ersten Drittel des Abwasserteiches künstlich belüftet und durch die künstliche Belüftung nach einem vorbestimmten Strömungsmuster umgewälzt wird.

5. Verfahren nach einem der vorstehenden Ansprüche, dadurch gekennzeichnet, daß das Abwasser mindestens einen Abwasserteich mit einer vorbestimmten mittleren Aufenthaltszeit durchsetzt und in die zweite Reinigungsstufe übertritt.

6. Verfahren nach einem der Ansprüche 1 bis 5, dadurch gekennzeichnet, daß das Abwasser in der zweiten Reinigungsstufe ein mit emersen Helophyten bepflanztes, im wesentlichen vollständig hydromorphes, mineralisches Festbett in einer vorgegebenen Neigungsrichtung nach einem einstellbaren hydraulischen Gradienten durchströmt.

7. Verfahren nach Anspruch 6, dadurch gekennzeichnet, daß die emersen Helophyten aus der Gruppe der Großröhrichtarten ausgewählt werden.

8. Verfahren nach Anspruch 6 oder 7, dadurch gekennzeichnet, daß das Abwasser die zweite Reinigungsstufe mit einer vorgegebenen mittleren Aufenthaltszeit durchsetzt.

9. Verfahren nach Anspruch 8, dadurch gekennzeichnet, daß die mittlere Aufenthaltszeit des Abwassers in der zweiten Reinigungsstufe durch Steuerung des hydraulischen Gradienten und in Abhängigkeit von der Aufenthaltszeit in der ersten Reinigungsstufe eingestellt wird.

10. Verfahren nach einem der Ansprüche 6 bis 9, dadurch gekennzeichnet, daß das mineralische Festbett aus Kalk oder Dolomit mit einer Korngröße im Bereich von 8 bis 32 mm ausgewählt wird.

11. Verfahren nach Anspruch 10, dadurch gekennzeichnet, daß dem mineralischen Festbett eisenhaltiges Material zugemischt wird.

12. Verfahren nach einem der Ansprüche 6 bis 11, dadurch gekennzeichnet, daß das Abwasser im Bereich des bepflanzten mineralischen Festbettes belüftet wird.

13. Verfahren nach einem der Ansprüche 6 bis 12, dadurch gekennzeichnet, daß das Abwasser in einem dem bepflanzten mineralischen Festbett vorgeschalteten Vorbereich belüftet wird.

14. Verfahren nach einem der vorstehenden Ansprüche, dadurch gekennzeichnet, daß zwischen dem

20

mindestens einen Abwasserteich und der zweiten Reinigungsstufe ein Nachklärteich angeordnet ist.

15. Verfahren nach einem der Ansprüche 1 bis 14, dadurch gekennzeichnet, daß der ersten Reinigungsstufe ein Rechenwerk vorgeschaltet wird.

**Claims**
**Claims for the following Contracting States : AT, ES, FR, GB, IT**

1. Method of purifying sewage waters containing ammonia or ammonium compounds, wherein the predominant amount of the ammonia or ammonium compounds is oxidised to nitrate under aerobic conditions in the presence of nitric bacteria in a first purification stage and the nitrate which is formed in the first purification stage, is converted to nitrogen under anaerobic conditions in a consecutive second purification stage,

   characterised in that the sewage water is passed through at least one aerated sewage water pond in the first purification stage and there is added to the sewage water suspended matter which produces a slightly alkaline reaction in said sewage water and furthers the growth of ubiquitous nitric bacteria.

2. Method according to claim 1, characterised in that calcium hydroxide is added to the sewage water by means of which calcium hydroxide, under the reaction conditions, there is adjusted in the sewage water a pH range which is favourable for the growth of the ubiquitous nitric bacteria, and there is formed suspended matter which furthers the growth of said ubiquitous nitric bacteria.

3. Method according to claim 2, characterised in that the calcium hydroxide is added to the sewage water in suspension in metered quantities in an inlet region of the first purification stage and a pH value in the range of 7 to 8 is adjusted in the sewage water due to the metered addition.

4. Method according to any one of claims 1 to 3, characterised in that the sewage water is artificially aerated in a first third of the sewage water pond and circulated therein according to a predetermined flow pattern due to the artificial aeration.

5. Method according to any one of the preceding claims, characterised in that the sewage water passes through at least one sewage water pond at a predetermined mean dwell time and passes over into the second purification stage.

6. Method according to any one of claims 1 to 5, characterised in that the sewage water, in said second purification stage, flows through a substantially completely hydromorphous, stationary mineral bed which is planted with emersed helophytes.

7. Method according to claim 6, characterised in that the emersed helophytes are selected from the group of large reed species.

8. Method according to claim 6 or 7, characterised in that the sewage water passes through the second purification stage at a predetermined mean dwell time.

9. Method according to claim 8, characterised in that the mean dwell time of the sewage water in the second purification stage is adjusted by controlling the hydraulic gradient and as a function of the dwell time in the first purification stage.

10. Method according to any one of claims 6 to 9, characterised in that the stationary mineral bed is selected from limestone or dolomite having a grain size in the range of 8 to 32 mm.

11. Method according to claim 10, characterised in that ferruginous material is admixed to the stationary mineral bed.

12. Method according to any one of claims 6 to 11, characterised in that the sewage water is aerated in the region of the plant-containing stationary mineral bed.

13. Method according to any one of claims 6 to 12, characterised in that the sewage water is aerated in a pre-region preceding the plant-containing stationary mineral bed.

14. Method according to any one of the preceding claims, characterised in that a secondary treatment pond is arranged intermediate the at least one sewage water pond and the second purification stage.

15. Method according to any one of claims 1 to 14, characterised in that a rake device precedes the first purification stage.

**Claims for the following Contracting State : DE**

1. Method of purifying sewage waters containing ammonia or ammonium compounds, wherein the predominant amount of the ammonia or ammonium compounds is oxidised to nitrate under aerobic conditions in the presence of nitric bacteria in a first purification stage and the nitrate which is formed in the first purification stage, is converted to nitrogen under anaerobic conditions in a consecutive second purification stage,

characterised in that the sewage water is passed through at least one aerated sewage water pond in the first purification stage and there is added to the sewage water suspended matter which produces a slightly alkaline reaction in said sewage water and furthers the growth of ubiquitous nitric bacteria.

2. Method according to claim 1, characterised in that calcium hydroxide is added to the sewage water by means of which calcium hydroxide, under the reaction conditions, there is adjusted in the sewage water a pH range which is favourable for the growth of the ubiquitous nitric bacteria, and there is formed suspended matter which furthers the growth of said ubiquitous nitric bacteria.

3. Method according to claim 2, characterised in that the calcium hydroxide is added to the sewage water in suspension in metered quantities in an inlet region of the first purification stage and a pH value in the range of 7 to 8 is adjusted in the sewage water due to the metered addition.

4. Method according to any one of claims 1 to 3, characterised in that the sewage water is artificially aerated in a first third of the sewage water pond and circulated therein according to a predetermined flow pattern due to the artificial aeration.

5. Method according to any one of the preceding claims, characterised in that the sewage water passes through the at least one sewage water pond at a predetermined mean dwell time and passes over into the second purification stage.

6. Method according to any one of claims 1 to 5, characterised in that the sewage water, in the second purification stage, flows through a sunstantialle completely hydromorphous, stationary mineral bed which is planted with emersed helophytes, at a predetermined direction of inclination and in accordance with an adjustable hydraulic gradient.

7. Method according to claim 6, characterised in that the emersed helophytes are selected from the group of large reed species.

8. Method according to claim 6 or 7, characterised in that the sewage water passes through the second purification stage at a predetermined mean dwell tine.

9. Method according to claim 8, characterised in that the mean dwell time of the sewage water in the second purification stage is adjusted by controllimg the hydraulic gradient and as a function of the dwell time in the first purification stage.

10. Method according to any one of claims 6 to 9, characterised in that the stationary mineral bed is selected from limestone or dolomite having a grain size in the range of 8 to 32 mm.

11. Method according to claim 10, characterised in that ferruginous material is admixed to the stationary mineral bed.

**12.** Method according to any one of claims 6 to 11, characterised in that the sewage water is aerated in the region of the plant-containing stationary mineral bed.

**13.** Method according to any one of claims 6 to 12, characterised in that the sewage water is aerated in a pre-region preceding the plant-containing stationary mineral bed.

**14.** Method according to any one of the preceding claims, characterised in that a secondary treatment pond is arranged intermediate the at least one sewage water pond and the second purification stage.

**15.** Method according to any one of claims 1 to 14, characterised in that a rake device precedes the first purification stage.

**Revendications**
**Revendications pour les Etats contractants suivants : AT, ES, FR, GB, IT**

**1.** Procédé déstiné à l'épuration d'eaux d'égout comprenant de l'ammoniac ou des combinaisons d'ammonium, dans une première étape d'épuration la quantité principale de l'ammoniac ou des combinaisons d'ammonium étant oxydée en nitrate sous des conditions aérobie en présence de bactéries nitriques, et dans une seconde étape d'épuration succéssive, le nitrate formé dans la première étape d'épuration étant converti en azote sous des conditions anaérobie,
   caractérisé par le fait que les eaux d'égout sont guidées, dans la première étape d'épuration, par au moins un bassin de décantation aéré, et que des matières souspendues sont additionnées donnant aux eaux d'égout une réaction faiblement alcalin et favorisant la croissance de bactéries nitriques ubiquitaires.

**2.** Procédé selon la revendication 1, caractérisé par le fait que de l'hydroxyde de calcium est additionné aux eaux d'égout, par lequel sous les conditions de réaction une zone pH favorable à la croissance des bactéries nitriques ubiquitaires est ajustée, et des matières souspendues favorisant la croissance des bactéries nitriques ubiquitaires sont formées.

**3.** Procédé selon la revendication 2, caractérisé par le fait que l'hydroxyde de calcium est additionné par dosage en suspension aux eaux d'égout dans la zone d'amenée de la première étape d'épuration, et grâce au dosage une valeur pH dans le domaine de 7 à 8 est ajustée dans les eaux d'égout.

**4.** Procédé selon l'une des revendications 1 à 3, caractérisé par le fait que les eaux d'égout sont artificiellement aérées dans la première tiers du bassin de décantation et grâce à l'aération artificielle, renversées selon un dessin d'écoulement prédéterminé.

**5.** Procédé selon l'une des revendications ci-dessus, caractérisé par le fait que les eaux d'égout passe par au moins un bassin de décantation à un temps de séjour moyen prédéterminé, et passe à la seconde étape d'épuration.

**6.** Procédé selon l'une des revendications 1 à 5, caractérisé par le fait que les eaux d'égout s'écoulent par un lit fixe minéralique essentiellement complètement hydromorphe planté de hélophytes emerses.

**7.** Procédé selon la revendication 6, caractérisé par le fait que les hélophytes emerses sont choisis du groupe des espèces des grandes cannaies.

**8.** Procédé selon la revendication 6 ou 7, caractérisé par le fait que les eaux d'égout passent par la seconde étape d'épuration avec un temps de séjour moyen prédéterminé.

**9.** Procédé selon la revendication 8, caractérisé par le fait que le temps de séjour moyen des eaux d'égout dans la seconde étape d'épuration est ajusté par commande du gradient hydraulique et en fonction du temps de séjour dans la première étape d'épuration.

**10.** Procédé selon l'une des revendications 6 à 9, caractérisé par le fait que le lit fixe minéralique est choisi de chaux ou de dolomite d'un grosseur de grain dans le domaine de 8 à 32 mm.

**11.** Procédé selon la revendication 10, caractérisé par le fait qu'une matière ferreuse est additionnée au lit minéraliqque.

**12.** Procédé selon l'une des revendications 6 à 11, caractérisé par le fait que les eaux d'égout sont aérées dans le domaine du lit fixe minéralique planté.

**13.** Procédé selon l'une des revendications 6 à 12, caractérisé par le fait que les eaux d'égout sont aérées dans un domaine préliminaire en avant du lit fixe minéralique planté.

**14.** Dispositif sleon l'une des revendications ci-dessus, caractérisé par le fait qu'un bassin de décantation finale est disposé entre le ou les bassins de décantation et la seconde étape d'épuration.

**15.** Procédé selon l'une des revendications 1 à 14, caractérisé par le fait qu'un compteur est intercalé en avant de la première étape d'épuration.

**Revendications pour l'Etat contractant siuvant : DE**

**1.** Procédé déstiné à l'épuration d'eaux d'égout comprenant de l'ammoniac ou des combinaisons d'ammonium, dans une première étape d'épuration la quantité principale de l'ammoniac ou des combinaisons d'ammonium étant oxydée en nitrate sous des conditions aérobie en présence de bactéries nitriques, et dans une seconde étape d'épuration succéssive, le nitrate formé dans la première étape d'épuration étant converti en azote sous des conditions anaérobie,

caractérisé par le fait que les eaux d'égout sont guidées, dans la première étape d'épuration, par au moins un bassin de décantation aéré, et que des matières souspendues sont additionnées donnant aux eaux d'égout une réaction faiblement alcalin et favorisant la croissance de bactéries nitriques ubiquitaires.

**2.** Procédé selon la revendication 1, caractérisé par le fait que de l'hydroxyde de calcium est additionné aux eaux d'égout, par lequel sous les conditions de réaction une zone pH favorable à la croissance des bactéries nitriques ubiquitaires est ajustée, et des matières souspendues favorisant la croissance des bactéries nitriques ubiquitaires sont formées.

**3.** Procédé selon la revendication 2, caractérisé par le fait que l'hydroxyde de calcium est additionné par dosage en suspension aux eaux d'égout dans la zone d'amenée de la première étape d'épuration, et grâce au dosage une valeur pH dans le domaine de 7 à 8 est ajustée dans les eaux d'égout.

**4.** Procédé selon l'une des revendications 1 à 3, caractérisé par le fait que les eaux d'égout sont artificiellement aérées dans la première tiers du bassin de décantation et grâce à l'aération artificielle, renversées selon un dessin d'écoulement prédéterminé.

**5.** Procédé selon l'une des revendications ci-dessus, caractérisé par le fait que les eaux d'égout passe par au moins un bassin de décantation à un temps de séjour moyen prédéterminé, et passe à la seconde étape d'épuration.

**6.** Procédé selon l'une des revendications 1 à 5, caractérisé par le fait que les eaux d'égout s'écoulent par un lit fixe minéralique essentiellement complètement hydromorphe planté de hélophytes emerses dans une direction d'inclinaison prédéterminée selon un gradien hydraulique ajustable.

**7.** Procédé selon la revendication 6, caractérisé par le fait que les hélophytes emerses sont choisis du groupe des espèces des grandes cannaies.

**8.** Procédé selon la revendication 6 ou 7, caractérisé par le fait que les eaux d'égout passent par la seconde étape d'épuration avec un temps de séjour moyen prédéterminé.

**9.** Procédé selon la revendication 8, caractérisé par le fait que le temps de séjour moyen des eaux d'égout dans la seconde étape d'épuration est ajusté par commande du gradient hydraulique et en fonction du temps de séjour dans la première étape d'épuration.

10. Procédé selon l'une des revendications 6 à 9, caractérisé par le fait que le lit fixe minéralique est choisi de chaux ou de dolomite d'un grosseur de grain dans le domaine de 8 à 32 mm.

11. Procédé selon la revendication 10, caractérisé par le fait qu'une matière ferreuse est additionnée au lit minéraliqque.

12. Procédé selon l'une des revendications 6 à 11, caractérisé par le fait que les eaux d'égout sont aérées dans le domaine du lit fixe minéralique planté.

13. Procédé selon l'une des revendications 6 à 12, caractérisé par le fait que les eaux d'égout sont aérées dans un domaine préliminaire en avant du lit fixe minéralique planté.

14. Dispositif sleon l'une des revendications ci-dessus, caractérisé par le fait qu'un bassin de décantation finale est disposé entre le ou les bassins de décantation et la seconde étape d'épuration.

15. Procédé selon l'une des revendications 1 à 14, caractérisé par le fait qu'un compteur est intercalé en avant de la première étape d'épuration.

*Fig.1*

Fig.2

EP 0 247 519 B1

Fig.3